# EUROPÄISCHE PATENTSCHRIFT

(11) **EP 2 470 281 B1**
(45) Veröffentlichungstag und Bekanntmachung des Hinweises auf die Patenterteilung: **14.10.2015**
(21) Anmeldenummer: 10740684.5
(22) Anmeldetag: 11.08.2010
(51) Int. Cl.: B01D 29/11, B01D 35/147

(54) **FILTEREINRICHTUNG**
FILTER DEVICE
DISPOSITIF DE FILTRATION

(30) Priorität: 24.08.2009 DE 102009038402
(43) Veröffentlichungstag der Anmeldung: 04.07.2012
(73) Patentinhaber: Mahle International GmbH, 70376 Stuttgart (DE)
(72) Erfinder: GRÖNER, Alfred, 74613 Öhringen (DE); STEINER, Gerhard, 74613 Öhringen (DE)
(74) Vertreter: BRP Renaud & Partner mbB Rechtsanwälte Patentanwälte Steuerberater
(86) Internationale Anmeldenummer: PCT/EP2010/061685
(87) Internationale Veröffentlichungsnummer: WO 2011/023550

(56) Entgegenhaltungen:
- WO-A2-2008/027347
- DE-A1- 10 105 612
- DE-A1-102004 005 772
- DE-U1-202007 013 216

## Beschreibung

Die vorliegende Einrichtung betrifft eine Filtereinrichtung, insbesondere eine Flüssigkeitsfiltereinrichtung, vorzugsweise eine Ölfiltereinrichtung, mit den Merkmalen des Oberbegriffs des Anspruchs 1.

Filtereinrichtungen dieser Art können beispielsweise in industriellen Anlagen in einem Hydraulikkreis angeordnet sein, um Verunreinigungen aus dem Hydraulikmittel herauszufiltern. Das Hydraulikmittel kann ein Schmieröl oder ein Kühlmittel sein. Vorzugsweise handelt es sich um einen Kühl-/Schmierstoff. Schmierstoffe, die gleichzeitig zur Kühlung dienen, können beispielsweise bei Bearbeitungsmaschinen zur Anwendung kommen. Bei derartigen Anwendungen kann es sich um einen offenen Hydraulikkreis handeln, bei dem zumindest ein Teil des Kühl-/Schmierstoffs unmittelbar in die Bearbeitungszone eingebracht wird. Bei einer spanenden Bearbeitung kommt es dabei zu einer starken Verunreinigung des Kühl-/Schmierstoffs. Derartige Verunreinigungen werden mit Hilfe hier vorgestellter Filtereinrichtungen aus dem Kühl-/Schmierstoff abgeführt. Der gereinigte Kühl-/Schmierstoff kann dann erneut verwendet werden.

Durch den Filtrierbetrieb können sich Filterelemente, die innerhalb der jeweiligen Filtereinrichtung eine Rohseite von einer Reinseite trennen, allmählich durch die abgeschiedenen Verunreinigungen zusetzen. Es bildet sich rohseitig am Filterelement ein sogenannter Filterkuchen. Durch diese Anlagerungen nimmt der Durchströmungswiderstand des Filterelements zu. Gleichzeitig kommt es auch zu einer signifikanten Verbesserung der Filtrationswirkung.

Um bei einem zu hohen Druckanstieg am Filterelement eine Beschädigung des Filterelements bzw. der Filtereinrichtung zu vermeiden, ist es grundsätzlich möglich, einen Bypass zur Umgehung des Filterelements vorzusehen, der mit Hilfe eines Bypassventils gesteuert werden kann. Das Bypassventil öffnet dann bei einem unzulässig hohen Differenzdruck zwischen Rohseite und Reinseite.

Aus der DE 101 05 612 A1 ist eine Filtereinrichtung bekannt, bei der ein Filterelement in einem Filtergehäuse eine Rohseite von einer Reinseite trennt und bei dem ein Bypassventil einen das Filterelement umgehenden Bypass steuert. Hierzu weist das Bypassventil ein Ventilglied zum Steuern einer Bypassöffnung auf, die einen mit der Rohseite fluidisch verbundenen Kopplungsraum des Bypassventils mit der Reinseite fluidisch verbindet. Das Ventilglied ist mit einer von einer Schließfeder erzeugten Vorspannung in eine die Bypassöffnung schließende Schließstellung angetrieben. Mit Hilfe einer Stelleinrichtung kann die am Ventilglied angreifende Vorspannung verändert werden. Bei der bekannten Filtereinrichtung kann abhängig vom jeweiligen Einsatzzweck der Filtereinrichtung mit Hilfe der Stelleinrichtung vor der Montage der Filtereinrichtung die Vorspannung auf einen gewünschten Öffnungsdruck stationär eingestellt werden.

Weitere Filtereinrichtungen, bei denen der Öffnungsdruck, bei dem ein Bypassventil öffnet, stationär für den jeweiligen Anwendungsfall eingestellt werden kann, sind aus der DE 20 2007 013 216 U1 und aus der DE 14 36 289 A bekannt.

Aus der FR 15 75 877 A1 ist eine Filtereinrichtung bekannt, die eine Ventileinrichtung mit einer Verstopfungsanzeigevorrichtung umfasst. Dabei besitzt die Verstopfungsanzeigevorrichtung ein Anzeigeelement, das mit einer zwischen Rohseite und Reinseite aufgespannten Membran verbunden ist. Eine Verstopfung des Filterelements führt zu einem Druckanstieg auf der Rohseite, was zu einer entsprechenden Verstellbewegung der Membran und somit zu einer entsprechenden Verstellbewegung des Anzeigeelements führt.

In Hydrauliksystemen, insbesondere bei einem Kühl-/Schmierstoffkreis, können unterschiedliche Systemdrücke zur Anwendung kommen. Beispielsweise können ein Last- oder Arbeitsbetrieb und ein Leerlaufbetrieb voneinander unterschieden werden. Bei einem Leerlaufbetrieb kann beispielsweise ein Mindestvolumenstrom erforderlich sein, um eine Schmierung der an den Hydraulikkreis angeschlossenen Maschinen aufrechterhalten zu können. Um hier möglichst wenig Energie zu verbrauchen, herrscht während eines derartigen Leerlaufbetriebs im Hydrauliksystem ein vergleichsweise niedriges Druckniveau. Um den niedrigen Druck des Leerlaufbetriebs auch bei verschmutztem Filterelement gewährleisten zu können, muss das Bypassventil schon bei einem relativ niedrigen Druck öffnen können. Während eines Arbeitsbetriebs oder Lastbetriebs muss das Hydrauliksystem zusätzlich zur Schmierung auch die gewünschte Kühlung realisieren können. Dementsprechend ist ein größerer Volumenstrom erforderlich. Außerdem fällt im Arbeitsbetrieb die Verschmutzung des Kühl-/Schmierstoffs an, so dass die volle Filtrationswirkung des Filterelements ausgeschöpft werden soll. Dementsprechend ist es erwünscht, den zur Verfügung stehenden Systemdruck zur Filtration des gesamten Volumenstroms zu nutzen. Folglich muss das Bypassventil für den Arbeitsbetrieb erst bei einem relativ hohen Öffnungsdruck öffnen. Somit entstehen sich widersprechende Anforderungen an das Bypassventil. Hinzu kommen besondere Betriebszustände, wie zum Beispiel ein Kaltstart des Hydrauliksystems, bei dem das jeweils verwendete Hydraulikmedium, insbesondere ein Öl, eine höhere Viskosität besitzt als bei seiner Betriebstemperatur.

Die vorliegende Erfindung beschäftigt sich mit dem Problem, für eine Filtereinrichtung der eingangs genannten Art eine verbesserte Ausführungsform anzugeben, die sich insbesondere dadurch auszeichnet, dass sie bei variierenden Systemdrücken unterschiedliche Öffnungsdrücke für das Bypassventil bereitstellt.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht insbesondere auf dem allgemeinen Gedanken, das Bypassventil mit einer Stelleinrichtung auszustatten, mit deren Hilfe im eingebauten Zustand bzw. während des Betriebs der Filtereinrichtung die Vorspannung verändert werden kann, mit der das Ventilglied in seine Schließstellung angetrieben ist. Mit Hilfe der Stelleinrichtung können abhängig von wenigstens einer Steuergröße insbesondere Kräfte erzeugt werden, welche die z.B. die Schließkraft einer Schließfeder erhöhen oder reduzieren, um so den Öffnungsdruck bzw. die Öffnungsdruckdifferenz variieren zu können, ab der das Bypassventil den Bypass öffnet. Mit Hilfe einer derartigen Stelleinrichtung kann somit für unterschiedliche Betriebszustände die Öffnungsdruckdifferenz variiert werden. Die Vorspannung kann dynamisch an variierende Betriebszustände angepasst werden. Insbesondere ist es dadurch möglich, bei einem niedrigen Systemdruck auch einen niedrigen Öffnungsdruck vorzusehen, während gleichzeitig für einen hohen Systemdruck ein entsprechend erhöhter Öffnungsdruck bereitgestellt werden kann. Somit lassen sich für die genannten Betriebszustände, nämlich Leerlaufbetrieb und Lastbetrieb deutlich unterschiedliche Öffnungsdrücke für das Bypassventil realisieren, um die für den jeweiligen Betriebszustand gewünschte Funktionalität zu ermöglichen.

Zur Realisierung dieser dynamisch, also während des Betriebs der Filtereinrichtung arbeitenden Stelleinrichtung kann die Stelleinrichtung mit einem Steuerraum gekoppelt sein und die am Ventilglied angreifende Vorspannung abhängig von einem im Steuerraum herrschenden Steuerdruck verändern.

Besonders vorteilhaft ist dabei eine Ausführungsform, bei welcher die Stelleinrichtung ein Stellglied aufweist, das den Steuerraum vom Kopplungsraum fluidisch trennt und das abhängig von einer Druckdifferenz zwischen Kopplungsraum und Steuerraum zum Verändern der am Ventilglied angreifenden Vorspann nung verstellbar ist. Somit kann die Druckdifferenz zwischen Kopplungsraum und Steuerraum als Antriebsgröße oder Steuerparameter verwendet werden, um das Stellglied und somit die Vorspannung zu verstellen.

Beispielsweise kann entsprechend bevorzugter Alternativen der Steuerraum mit einer Umgebung des Filtergehäuses kommunizieren, so dass der Steuerdruck vom Umgebungsdruck abhängt und mit dem Umgebungsdruck variiert. Alternativ kann der Steuerraum mit einer Steuereinrichtung zum Einstellen des Steuerdrucks gekoppelt sein, wodurch quasi beliebige Steuerparameter zum Verändern oder Anpassen des Steuerdrucks herangezogen werden können. Insbesondere lassen sich dann auch externe Parameter berücksichtigen, die zum Beispiel von einem Betriebszustand einer mit der Filtereinrichtung ausgestatteten Maschine korrelieren. Alternativ kann der Steuerraum auch hermetisch verschlossen sein, wodurch der Steuerdruck auf einem vorbestimmten Absolutdruck statisch eingestellt werden kann. In diesem Fall liegt keine dynamische Anpassung des Steuerdrucks vor. Vielmehr handelt es sich hierbei um eine alternative Lösung, mit deren Hilfe abhängig vom Anwendungsfall der Steuerdruck im Steuerraum fest bzw. absolut vorgegeben werden kann.

Entsprechend einer vorteilhaften Ausführungsform kann die Schließfeder indirekt über eine Koppelstange oder direkt am Stellglied abgestützt sein. Durch Verändern der Position des Stellglieds, das beispielsweise hubverstellbar sein kann, lässt sich die Schließfeder komprimieren oder dekomprimieren, was zu einer entsprechenden Veränderung der Vorspannung führt. Ein derartiges Stellglied lässt sich besonders einfach so ausgestalten und anordnen, dass es die gewünschte Veränderung der Federvorspannung ermöglicht.

Beim Stellglied kann es sich beispielsweise um eine Membran handeln, die den Kopplungsraum von einem Steuerraum trennt. Eine derartige Membran ist einerseits relativ zum Filtergehäuse ortsfest angebracht, während sie andererseits relativ zum Filtergehäuse beweglich ist und dadurch eine Abstützstelle der Schließfeder indirekt über die Koppelstange oder direkt verstellen kann. Die Verstellung der Membran erfolgt dabei abhängig von einer Druckdifferenz zwischen Kopplungsraum und Steuerraum. Da der Kopplungsraum mit der Rohseite kommuniziert, gibt der im Steuerraum herrschende Druck die Öffnungsdruckdifferenz vor. Insoweit ist die Vorspannung durch den rohseitigen Druck gesteuert.

Entsprechend einer vorteilhaften Weiterbildung kann der Steuerraum in einer Druckdose ausgebildet sein, an der ebenfalls die Membran angebracht ist. Bei einer derartigen Bauweise kann es sich beim Steuerraum insbesondere um einen vollständig geschlossenen Raum handeln, so dass ein Absolutdruck fest vorgegeben ist, gegen den der Druck im Kopplungsraum arbeitet, um die Membran zu verstellen.

Bei einer alternativen Ausführungsform kann das Stellglied als Kolben ausgestaltet sein, der in einem Zylinder hubverstellbar angeordnet ist. Durch die Verstellbarkeit des Kolbens relativ zum Filtergehäuse kann somit auch die Abstützstelle der Schließfeder verstellt werden, um deren Vorspannung zu variieren. Der Kolben kann im Zylinder ebenfalls einen Kopplungsraum von einem Steuerraum trennen. Besagter Steuerraum kann - wie zuvor bei der Druckdose - hermetisch nach außen abgedichtet sein. Ebenso ist es möglich, den Steuerraum über wenigstens eine Verbindungsöffnung mit einer, insbesondere atmosphärischen, Umgebung des Filtergehäuses kommunizierend zu verbinden. In diesem Fall arbeitet der im Kopplungsraum herrschende Druck gegen den Umgebungsdruck. Des Weiteren ist es bei einer alternativen Ausführungsform ebenso möglich, den Steuerraum über einen Steuerdruckanschluss mit einem Steuerdruck zu beaufschlagen. Ein derartiger Steuerdruck kann dann quasi beliebig vorgegeben werden. Beispielsweise kann eine Steuereinrichtung vorgesehen sein, die mit Hilfe einer entsprechenden Steuerdruckpumpe verbunden ist, um unterschiedlich hohe Steuerdrücke zu generieren, die dann dem Steuerraum zugeführt werden können. Die Steuereinrichtung kann beispielsweise über wenigstens einen Drucksensor mit dem Hydrauliksystem, insbesondere mit der Rohseite des Filtergehäuses oder mit der Reinseite des Filtergehäuses, verbunden sein, um abhängig von den gemessenen Drücken den Steuerdruck einstellen zu können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondem auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

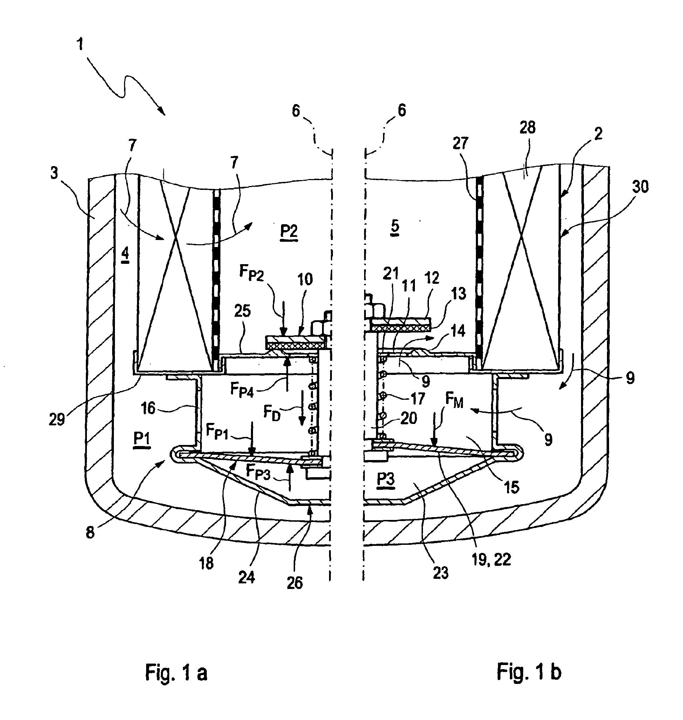

Es zeigen, jeweils schematisch
- Fig. 1-7: jeweils einen stark vereinfachten Längsschnitt durch eine Filtereinrichtung im Bereich eines Bypassventils bei verschiedenen Ausführungsformen, wobei innerhalb der jeweiligen Figur links ein Schließzustand (a) und rechts ein Offenzustand (b) wiedergegeben ist.

Entsprechend den Fig. 1-7 umfasst eine Filtereinrichtung 1, bei der es sich bevorzugt um eine Flüssigkeitsfiltereinrichtung und insbesondere um eine Ölfiltereinrichtung handelt, zumindest ein Filterelement 2, das in einem Filtergehäuse 3 angeordnet ist und dabei eine Rohseite 4 von einer Reinseite 5 trennt. Im Beispiel ist das Filterelement 2 als Ringfilterelement ausgestaltet, das sich bezüglich einer Längsmittelachse 6 zylindrisch erstreckt. Entsprechend Pfeilen 7 ist das Filterelement 2 radial von außen nach innen durchströmt, so dass die Rohseite 4 außen und die Reinseite 5 innen angeordnet sind. Des Weiteren ist die Filtereinrichtung 1 mit einem Bypassventil 8 ausgestattet, das einen durch Pfeile 9 angedeuteten Bypass steuert, der das Filterelement 2 umgeht, also bei geöffnetem Bypassventil 8 die Rohseite 4 mit der Reinseite 5 verbindet. Das Bypassventil 8 besitzt ein Ventilglied 10, mit dessen Hilfe eine Bypassöffnung 11 steuerbar ist. Dabei verschließt das Ventilglied 10 in der links wiedergegebenen Schließstellung die Bypassöffnung 11, während es in der rechts dargestellten Offenstellung die Bypassöffnung 11 mehr oder weniger freigibt. Zur Realisierung der gewünschten Sperrwirkung kann das Ventilglied 10 eine vergleichsweise steife Ventilplatte 12 aufweisen, die an ihrer der Bypassöffnung 11 zugewandten Seite eine Dichtung 13 trägt, die im Beispiel als Dichtungsplatte ausgestaltet ist. Auch kann die Bypassöffnung 11 einen wulstartigen Öffnungsrand 14 aufweisen, der einen Ventilsitz bildet, mit dem die Dichtung 13 des Ventilglieds 10 in der Schließstellung zusammenwirkt. Die Bypassöffnung 11 verbindet bei geöffnetem Ventilglied 10 einen Kopplungsraum 15 des Bypassventils 8 mit der Reinseite 5, also hier mit dem Innenraum des Filterelements 2. Der Kopplungsraum 15 kommuniziert seinerseits über Verbindungsöffnungen 16 mit der Rohseite 4.

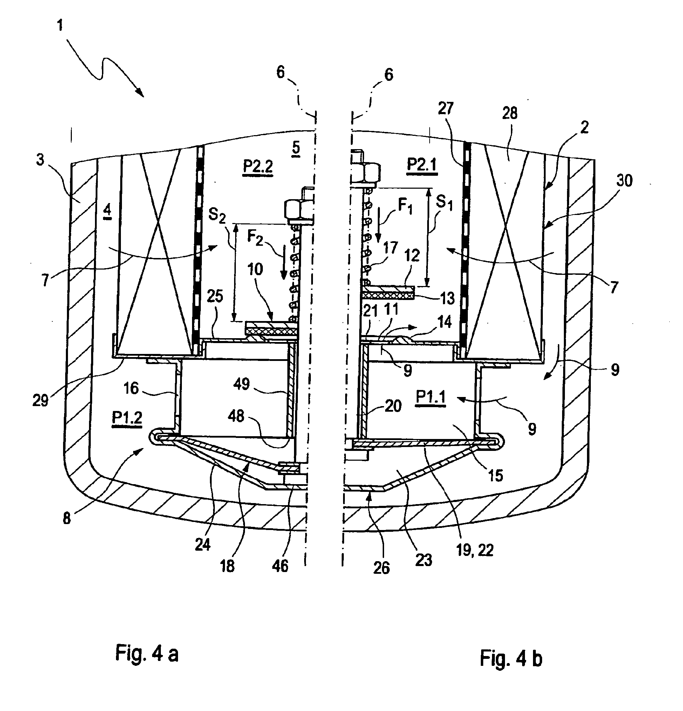

Das Bypassventil 8 weist außerdem eine Schließfeder 17 auf. Die Schließfeder 17 dient dazu, das Ventilglied 10 mit einer Feder- oder Schließkraft in die Schließstellung vorzuspannen bzw. anzutreiben. In Fig. 1 ist die Federkraft mit F_{D} bezeichnet. Bei den hier gezeigten Ausführungsformen ist die Schließfeder 17 jeweils als Schraubenfeder ausgestaltet. Grundsätzlich sind jedoch auch andere Federformen, wie zum Beispiel eine Tellerfeder, denkbar. Bei den Ausführungsformen der Fig. 1-3 ist die Schließfeder 17 als Zugfeder ausgestaltet, so dass sie auf das Ventilglied 10 eine in Schließrichtung wirkende Zugkraft einleitet. Im Unterschied dazu ist die Schließfeder 17 bei den Ausführungsformen der Fig. 4-7 als Druckfeder ausgestaltet, die auf das Ventilglied eine in Schließrichtung wirkende Druckkraft einleitet.

Das Bypassventil 8 ist außerdem mit einer Stelleinrichtung 18 ausgestattet, mit deren Hilfe eine das Ventilglied 10 in die Schließstellung antreibende Vorspannung, die ganz oder teilweise von der Federkraft der Schließfeder 17 erzeugt wird, verändert werden kann. Hierzu weist die Stelleinrichtung 18 vorzugsweise ein Stellglied 19 auf, das insgesamt oder nur in einem Stellbereich verstellbar ist, insbesondere hubverstellbar. An diesem Stellglied 19 ist die Schließfeder 17 abgestützt. Dabei kann die Schließfeder 17 am Stellglied 19 direkt abgestützt sein, wie in den Ausführungsformen der Fig. 1-3. Alternativ kann die Schließfeder 17 auch indirekt über eine Koppelstange 20 an diesem Stellglied 19 abgestützt sein, wie in den Ausführungsformen der Fig. 4-7.

Die Fig. 1-3 zeigen außerdem eine Ausführungsform, bei welcher die Schließfeder 17 einerseits am Stellglied 19 und andererseits an einem Widerlager 21 abgestützt ist, das relativ zur Bypassöffnung 11 ortsfest ausgestaltet ist. Die Koppelstange 20 dient bei diesen Ausführungsformen dazu, das Stellglied 19 fest mit dem Ventilglied 10 zu verbinden. In der Folge führt eine Verstellung des Stellglieds 19 unmittelbar zu einer Verstellung des Ventilglieds 10. Die am Stellglied 19 wirkenden Kräfte, werden dabei über die Koppelstange 20 direkt auch auf das Ventilglied 19 übertragen, wodurch sich dementsprechend die am Ventilglied 10 angreifende Vorspannung verändert.

Im Unterschied dazu ist bei den Ausführungsformen der Fig. 4-7 die Schließfeder 17 einerseits am Ventilglied 10 und andererseits an der Koppelstange 20 abgestützt. Ferner ist die Koppelstange 20 bei diesen Ausführungsformen fest mit dem Stellglied 19 verbunden, so dass eine Verstellung des Stellglieds 19 zu einer Verstellung der Koppelstange 20 führt, was die Position der koppelstangenseitigen Abstützstelle der Schließfeder 17 verändert und dadurch unmittelbar die Vorspannung der Schließfeder 17 verändert. Bei den hier gezeigten Ausführungsformen ist das Ventilglied 10 entlang der Koppelstange 20 hubverstellbar angeordnet. Hierzu durchsetzt die Koppelstange 20 das jeweilige Ventilglied 10. Ferner ist bei diesen Ausführungsformen die Schließfeder 17 an einer vom Stellglied 19 abgewandten Seite des Ventilglieds 10 angeordnet. Im Unterschied dazu ist bei den zuvor erläuterten Ausführungsformen der Fig. 1-3 die Schließfeder 17 an der gleichen Seite des Ventilglieds 10 angeordnet, an der sich auch das Stellglied 19 befindet.

Bei den Ausführungsformen der Fig. 1 und 4 ist das Stellglied 19 als Membran 22 ausgestaltet. Die Membran 22 ist einerseits fest mit der Koppelstange 20 verbunden und andererseits bezüglich des Filtergehäuses 3 ortsfest angeordnet. Sie ist soweit flexibel, dass der mit der Koppelstange 20 fest verbundene zentrale Stellbereich der Membran 22 bezüglich des Filtergehäuses 3 verstellbar ist, insbesondere hubverstellbar. Beispielsweise ist die Membran 22 aus einem Blech hergestellt. Ebenso kann die Membran 22 aus Kunststoff hergestellt sein. Die Membran 22 trennt den Kopplungsraum 15 von einem Steuerraum 23 druckdicht, so dass die Druckdifferenz zwischen Kopplungsraum 15 und Steuerraum 23 an der Membran 22 wirkt und deren Verstellung bewirkt.

Bei den Ausführungsformen der Fig. 1 und 4 ist besagter Steuerraum 23 in einer Druckdose 24 ausgebildet, an der auch die Membran 22 angebracht ist. Die Druckdose 14 schließt zusammen mit der Membran 22 den Steuerraum 23 vollständig ein, so dass dieser nach außen hermetisch abgedichtet ist. Entsprechend den hier gezeigten, bevorzugten Ausführungsformen weist die Druckdose 24 außerdem eine Trennwand 25 auf, welche die Bypassöffnung 11 enthält. Ferner ist im Inneren der Druckdose 24 der Kopplungsraum 15 ausgebildet. Insoweit enthält die Druckdose 24 das komplette Bypassventil 8. Mit anderen Worten, das Bypassventil 8 ist in die Druckdose 24 integriert. Die Druckdose 24 und das Bypassventil 8 bilden dadurch eine Ventilbaugruppe 26, die bezüglich des Filtergehäuses 3 ein separates Bauteil ist und insbesondere unabhängig vom Filtergehäuse 3 montierbar ist. Diese Ventilbaugruppe 26 ist bei den hier gezeigten Ausführungsformen der Fig. 1 und 4 am Filterelement 2 angebracht. Dabei können Filterelement 2 und Ventilbaugruppe 26 separate Komponenten bilden, die aneinander angebaut sind. Beispielsweise kann das Filterelement 2 eine Innenzarge 27 aufweisen, an der sich ein Filtermaterial 28 radial innen abstützt. Das Filtermaterial 28 ist axial an einer Endscheibe 29 angebracht, die radial offen ist und an die die Ventilbaugruppe 26 angebaut ist. Beispielsweise ist die Ventilbaugruppe 26 mit einem die Trennwand 25 aufweisenden zylindrischen Abschnitt der Druckdose 24 in die Öffnung der Endscheibe 29 bzw. in die Innenzarge 27 axial eingesteckt. Ebenso ist es möglich, die Ventilbaugruppe 26 integral am Filterelement 2 auszuformen. Beispielsweise kann die Endscheibe 29 integral an der Druckdose 24 ausgeformt sein.

Unabhängig davon, ob die Ventilbaugruppe 26 an das Filterelement 2 angebaut ist oder daran integral ausgeformt ist, können die Ventilbaugruppe 26 und das Filterelement 2 eine Ventil-Filter-Einheit 30 bilden, die komplett vormontierbar ist und die als Einheit in das Filtergehäuse 3 eingebaut werden kann und auch als Einheit austauschbar ist. Dies vereinfacht die Montage der Ventileinrichtung 1.

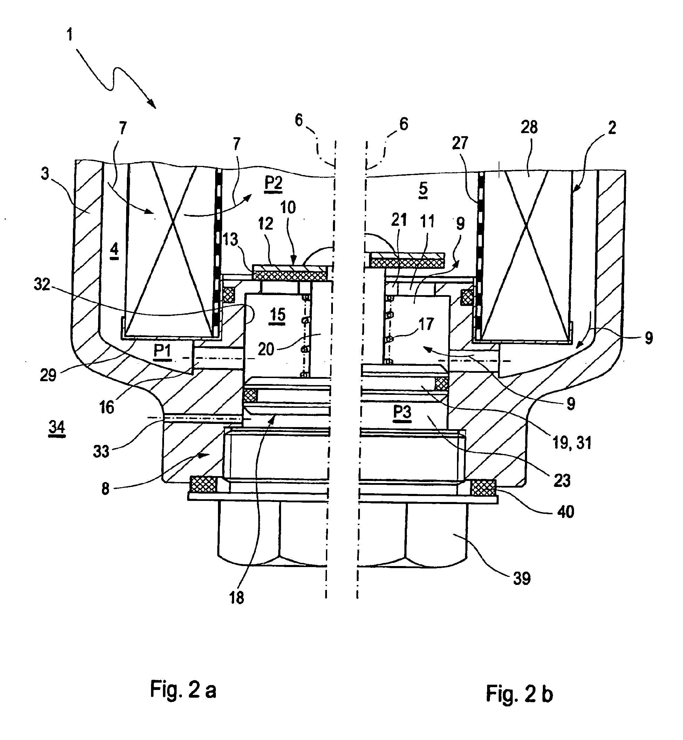

Bei den Ausführungsformen der Fig. 2, 3, 5-7 ist das Stellglied 19 als Kolben 31 ausgestaltet. Dieser Kolben 31 ist dabei in einem Zylinder 32 hubverstellbar angeordnet. Bei den hier vorgestellten Beispielen ist der Zylinder 32 im Filtergehäuse 3 integral ausgeformt. Ebenso ist grundsätzlich auch eine gebaute Ausführungsform denkbar, welche der Zylinder 32 in einem separaten Gehäuse ausgeformt ist, das in das Filtergehäuse 3 eingebaut ist.

Der Kolben 31 kann entsprechend den Ausführungsformen der Fig. 2, 5 und 6 im Zylinder 32 wie zuvor die Membran 22 den Kopplungsraum 15 von einem Steuerraum trennen, der ebenfalls mit 23 bezeichnet wird. Abhängig von der Druckdifferenz zwischen Steuerraum 23 und Kopplungsraum 15 ergibt sich ein Hub bzw. die Stellkraft für den Kolben 31, was sich bei den Ausführungsformen der Fig. 2 und 3 unmittelbar auf die Position des Ventilglieds 10 auswirkt und was sich bei den Ausführungsformen der Fig. 5 und 6 auf die Vorspannung der Schließfeder 17 auswirkt.

Bei der in Fig. 2 gezeigten Ausführungsform ist der Steuerraum 23 über wenigstens eine Verbindungsöffnung 33 mit einer Umgebung 34 des Filtergehäuses 3 kommunizierend verbunden. Besagte Umgebung 34 ist in der Regel atmosphärisch, so dass etwa 1 bar Umgebungsdruck herrscht.

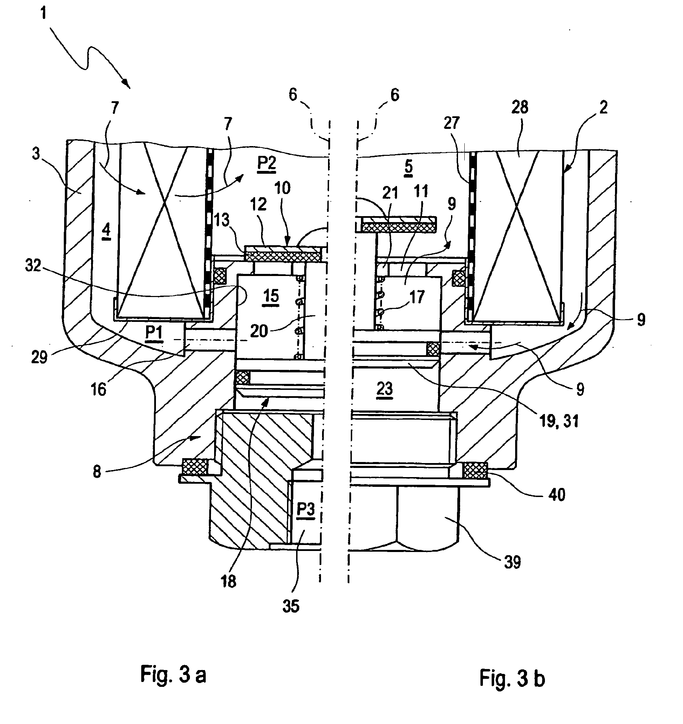

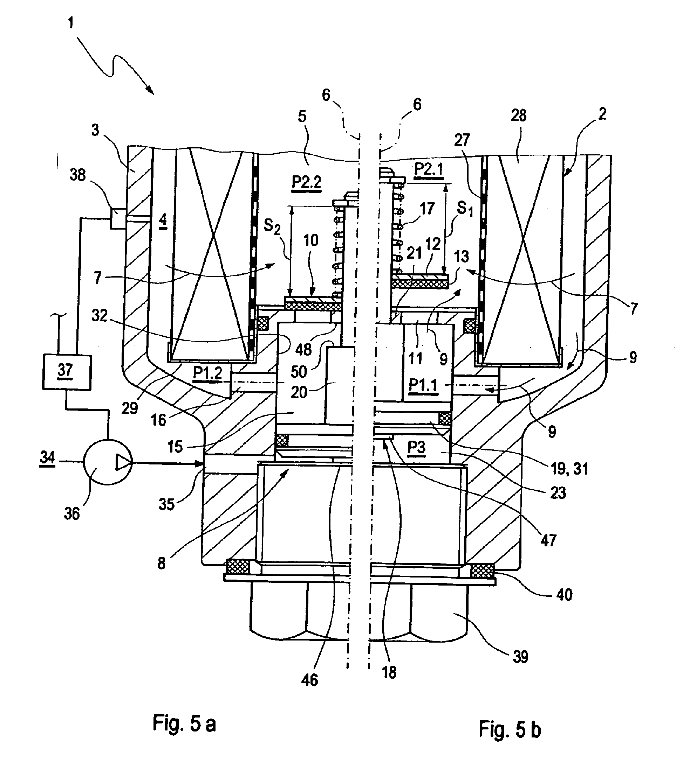

Bei den Ausführungsformen der Fig. 3, 5 und 6 ist dagegen zumindest ein Steuerdruckanschluss 35 vorgesehen, über den der Steuerraum 23 mit einem Steuerdruck beaufschlagt werden kann. Hierzu kann entsprechend Fig. 5 eine Steuerdruckpumpe 36 vorgesehen sein, die auf geeignete Weise an den Steuerdruckanschluss 35 angeschlossen ist und die saugseitig beispielsweise wieder an die Umgebung 34 angeschlossen ist. Zur Betätigung der Pumpe 36 kann eine Steuereinrichtung 37 vorgesehen sein, mit deren Hilfe der Steuerdruck P3 einstellbar ist. Hierzu erhält die Steuereinrichtung 37 eingangsseitig über entsprechende Steuerleitungen Eingangssignale, in deren Abhängigkeit sie die Pumpe 36 betätigt. Beispielsweise kann die Steuereinrichtung 37 an einen Drucksensor 38 angeschlossen sein, der den rohseitigen Druck erfasst. Auf diese Weise kann der Steuerdruck, also der Druck im Steuerraum 23 abhängig vom rohseitigen Druck eingestellt werden. Der Steuerdruck kann dabei pneumatisch oder hydraulisch erzeugt werden.

Bei den Ausführungsformen der Fig. 2, 3 und 5-7, bei denen der Zylinder 32 integral im Filtergehäuse 3 ausgeformt ist, ist der Zylinder 32 an einer vom Ventilglied 10 abgewandten oder entfernten Seite mit Hilfe eines Verschlusses 39 verschlossen, der hierzu beispielsweise in das Filtergehäuse 3 eingeschraubt sein kann. Mit 40 ist dabei eine Dichtung bezeichnet, die axial zwischen dem Verschluss 39 und dem Filtergehäuse 3 angeordnet sein kann.

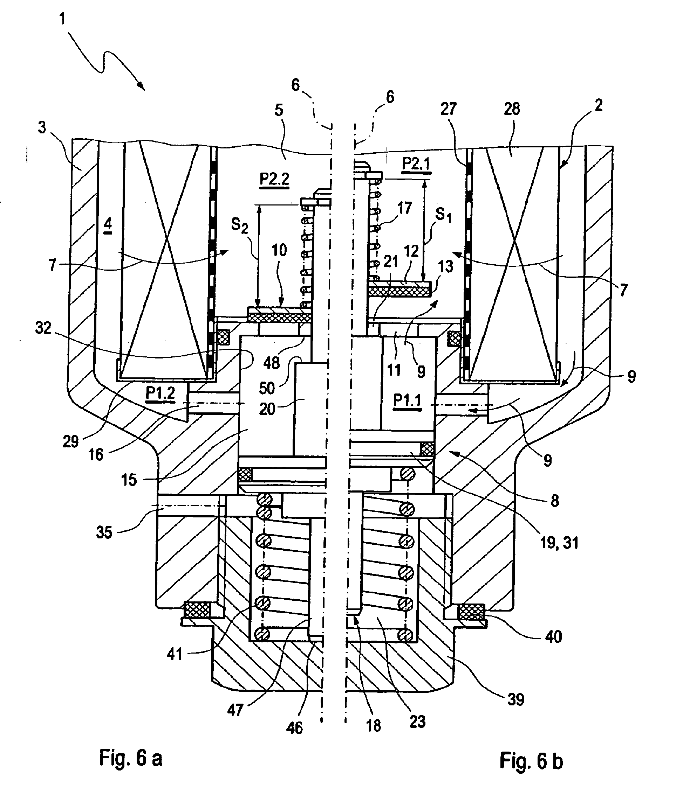

In Fig. 2 ist die Verbindungsöffnung 33 durch eine Wand des Filtergehäuses 3 hindurchgeführt. Bei den Ausführungsformen der Fig. 5 und 6 ist der Steuerdruckanschluss 35 durch die Wand des Filtergehäuses 3 hindurchgeführt. Bei der in Fig. 3 gezeigten Ausführungsform ist der Steuerdruckanschluss 35 durch den Verschluss 39 hindurchgeführt, wodurch der Verschluss 39 eine Doppelfunktion besitzt, da er einerseits den Zylinder 32 verschließt und andererseits den Druckanschluss 35 aufweist.

Die in Fig. 6 gezeigte Ausführungsform unterscheidet sich von der in Fig. 5 gezeigten Ausführungsform insbesondere durch eine Stellgliedfeder 41. Sie dient dazu, das Stellglied 19, hier den Kolben 31 in eine Richtung vorzuspannen, welche die Vorspannung, die mit Hilfe der Schließfeder 17 erzeugt wird, verstärkt. Hierzu ist die Stellgliedfeder 41 im Steuerdruckraum 23 angeordnet und erhöht dadurch die vom Steuerdruckraum 23 her auf den Kolben 31 wirkende Kraft.

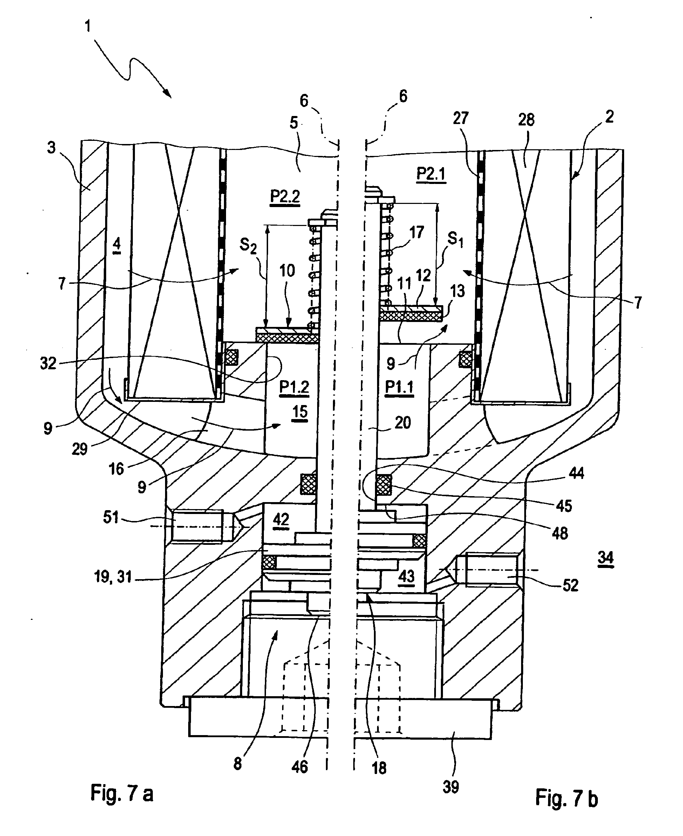

Fig. 7 zeigt eine Ausführungsform, bei welcher der Kolben 31 im Zylinder 32 einen ersten Steuerraum 42 von einem zweiten Steuerraum 43 trennt. Dabei sind beide Steuerräume 42, 43 vom Kopplungsraum 15 fluidisch entkoppelt. Das heißt, beide Steuerräume 42, 43 besitzen keine kommunizierende Verbindung zum Kopplungsraum 15. Hierzu durchsetzt die Kopplungsstange 20 eine Führungsbohrung 44, die in einem Boden des Filtergehäuses 3 eingebracht ist. Im Bereich dieser Führungsbohrung 44 kann außerdem eine Dichtung 45 vorgesehen sein, um den ersten Steuerraum 42 gegenüber dem Kopplungsraum 15 abzudichten. Der erste Steuerraum 42 ist über einen ersten Steuerdruckanschluss 51 mit einem ersten Steuerdruck beaufschlagbar. Der zweite Steuerraum 43 ist über einen zweiten Steuerdruckanschluss 52 mit einem zweiten Steuerdruck beaufschlagbar. Durch die Differenz der beiden Steuerdrücke kann die am Kolben 31 wirkende resultierende Kraft eingestellt werden, um gezielt die Vorspannung der Schließfeder 17 erhöhen oder reduzieren zu können. Grundsätzlich ist es ebenso möglich, einen der beiden Steuerdruckanschlüsse 51, 52 gegenüber der Umgebung 34 offen zu lassen, so dass der jeweilige Steuerdruckanschluss 51, 52 dann als Verbindungsöffnung zur, insbesondere atmosphärischen, Umgebung 34 dient.

Bei den Ausführungsformen der Fig. 4-6 ist die Stelleinrichtung 18 außerdem mit einem Endanschlag 46 ausgestattet, der im Folgenden auch als erster Endanschlag 46 bezeichnet wird. Der erste Endanschlag 46 dient zur Begrenzung des Verstellwegs des Stellglieds 19 in einer Richtung, welche die das Ventilglied 10 in die Schließstellung antreibende Vorspannung verstärkt. In Fig. 4 ist dieser erste Endanschlag 46 durch einen der Membran 22 gegenüberliegenden Boden der Druckdose 24 gebildet. An diesem ersten Endanschlag 46 kommt die Kopplungsstange 20 stirnseitig zur Anlage. Bei der in Fig. 5 und 6 gezeigten Ausführungsform ist der erste Endanschlag 46 jeweils am Verschluss 39 ausgebildet, an dem der jeweilige Kolben 31 über ein Anschlagelement 47 zur Anlage kommt. Ferner zeigen die Ausführungsformen der Fig. 4-6 einen weiteren oder zweiten Endanschlag 48, der den Verstellweg des Stellglieds 19 in der Gegenrichtung begrenzt, also in einer Richtung, welche die Vorspannung, die das Ventilglied 10 in dessen Schließstellung antreibt, reduziert. Bei der in Fig. 4 gezeigten Ausführungsform ist dieser zweite Endanschlag 48 an einer Hülse 49 ausgebildet, die koaxial zur Kopplungsstange 20 angeordnet ist und die bezüglich des Filtergehäuses 3 ortsfest angeordnet ist. Im Beispiel ist die Hülse 49 von der Trennwand 25 abgestützt, zum Beispiel am Widerlager 21. Bei den Ausführungsformen der Fig. 5 und 6 ist der zweite Endanschlag 48 durch das gehäusefeste Widerlager 21 gebildet, wobei die Koppelstange 20 eine Ringstufe 50 aufweist, die mit dem Widerlager 21 bzw. mit dem zweiten Endanschlag 48 zusammenwirkt.

Die hier vorgestellten Filtereinrichtungen 1 arbeiten wie folgt:
Entsprechend Fig. 1 ist das Filterelement 2 mit einem fest angeordneten Bypassventil 8 ausgerüstet. Das Bypassventil 8 ist von einem Ventilkäfig umschlossen, der den Kopplungsraum 15 umschließt und der die Verbindungsöffnungen 16 aufweist. Ein vom Filterelement 2 abgewandter Boden des Ventilkäfigs ist durch die Druckdose 24 gebildet. Die Membran 22 ist mit der Kopplungsstange 20 fest verbunden, die auch als Schaft des Ventils 8 bezeichnet werden kann. Die Koppelstange 20 zieht das als Platte ausgestaltete Ventilglied 10 durch die Kraft F_{D} der Schließfeder 17 auf den jeweiligen Ventilsitz, der hier durch den Öffnungsrand 14 der Bypassöffnung 11 gebildet ist. Das Ventilglied 10 hält das Ventil 8 bzw. die Bypassöffnung 11 geschlossen. Die Druckdose 24 ist in ihrem Steuerraum 23 mit einem Steuerdruck P₃ beaufschlagt, der zum Beispiel 1 bar betragen kann. Im Normalbetrieb ist das Filtergehäuse 3 rohseitig mit einem Innendruck P₁ beaufschlagt, der zum Beispiel 10 bar betragen kann. Dieser Innendruck P₁ wirkt auch auf die dem Kopplungsraum 15 zugewandte Außenseite der Membran 22 in der Druckdose 24. Dies ergibt nun eine Kraft F_{M}, die sich aus der Differenz der Kräfte F_{P1} - F_{P3} bildet. Dies sind die aus der Druckdifferenz P₁ - P₃ resultierenden Kräfte. Diese resultierende Kraft F_{M} auf die Membran 22 wirkt zusätzlich zur Schließkraft F_{D} der Schließfeder 17 auf das Ventilglied 10. Wechselt nun der Systemdruck, also der Druck auf der Rohseite P₁, zum Beispiel im Leerlauf der Anlage, zum Beispiel auf 2,5 bar, so reduziert sich die Membrankraft F_{M} auf die Koppelstange 20 und damit auch der Öffnungsdruck des Bypassventils 8. Die Erhöhung bzw. Reduzierung der Schließkraft des Ventils 8 errechnet sich aus dem Verhältnis der Membranfläche zur Fläche des Ventilglieds 10. Das Bypassventil 8 öffnet, wenn der Druck aus P₂ auf der Reinseite 5 des Filterelements 2 abfällt und damit die Kraft F_{P4} am Ventilglied 10 die Summe der Kräfte F_{P2}, F_{D} und F_{M} übersteigt.

Bei der in Fig. 2 gezeigten Ausführungsform ist das Bypassventil 8 in das Filtergehäuse 3 integriert und wird dementsprechend nicht mit dem Filterelement 2 gewechselt. Die Funktion der Membran 22 in der Druckdose 24 übernimmt hier der Kolben 31 im Zylinder 32.

Bei der in Fig. 3 gezeigten Ausführungsform kann der Steuerdruck P₃ variabel den Betriebsbedingungen angepasst werden. Die Erhöhung des Steuerdrucks P₃ bewirkt ein Absenken des Ventilöffnungsdrucks. Das heißt, das Ventilglied 10 öffnet dann bereits bei einem geringeren Differenzdruck zwischen Rohseite und Reinseite. Der Steuerdruck P₃ kann hydraulisch oder pneumatisch aufgebracht werden.

Bei der in Fig. 4 gezeigten Ausführungsform ist der Federweg der Schließfeder 17 jeweils durch einen mechanischen Anschlag 46 bzw. 48 begrenzt bzw. definiert. Im Ruhezustand bzw. Leerlaufbetrieb wird die Membran 22 durch die Schließfeder 17 gegen den oberen oder zweiten Anschlag 48 gezogen. Ein Federweg S₁ ist lang und dadurch die Federkraft F₁ niedrig, so dass auch der Ventilöffnungsdruck in diesem Fall niedrig ist. Diese Situation ist in Fig. 4b wiedergegeben. Der Systemdruck auf der Rohseite ist dann P_{1.1}. Der Druck auf der Reinseite ist dann P_{2.1}.

Steigt nun der Systemdruck rohseitig auf einen erhöhten Wert P_{1.2} an, wird die Membran 22 in die Druckdose 24 gedrückt. Ab einem definierten Druck wird dann die Endstellung am unteren oder ersten Anschlag 46 erreicht. Reinseitig herrscht dann der Druck P_{2.2}. Ein Federweg S₂ ist jetzt kurz und dementsprechend ist die Federkraft F₂ hoch. Somit ist auch der Ventilöffnungsdruck hoch gesetzt.

Durch den begrenzten Federweg zwischen den Wegen S₁ und S₂ kann der Ventilöffnungsdruck auf einen dem unteren Systemdruck zugeordneten Wert eingestellt werden. Steigt der Systemdruck an, ist die Schließfeder 17 bis zur vorgegebenen Position der Membran 22 am unteren oder ersten Anschlag 46 vorgespannt. Damit ist der höhere Ventilöffnungsdruck wirksam. Eine weitere Erhöhung des Systemdrucks verändert den Ventilöffnungsdruck nicht mehr.

Die in Fig. 5 gezeigte Ausführungsform entspricht weitgehend der in Fig. 4 gezeigten Ausführungsform, wobei jedoch hier die Drucksteuerung nicht über die Membran 22, sondern über den Kolben 31 erfolgt. Gleichzeitig ist bei dieser Ausführungsform vorgesehen, den Steuerdruck P₃ über den Steuerdruckanschluss 35 vorzugeben.

Bei der in Fig. 6 gezeigten Ausführungsform wird der Kolben 31 mit der zusätzlich vorgesehenen Stellgliedfeder 41 in die dem zweiten Endanschlag 48 zugeordnete obere Endstellung angetrieben und darin gehalten, bis die durch den Systemdruck aufgebrachte Kolbenkraft die Federkräfte der Stellgliedfeder 41 und die der Schließfeder 17 übersteigt und den Kolben 31 in Richtung des ersten Endanschlags 46, also hier in die untere Position antreibt. Der Umschaltdruck des Ventils 8 wird hier durch die Kolbenfläche und durch die Federkraft der Stellgliedfeder 41 bestimmt. Die Übergangsphase vom niedrigen zum erhöhten Ventilöffnungsdruck wird hierdurch kleiner.

Bei der in Fig. 7 gezeigten Ausführungsform wird die Vorspannung der Schließfeder 17 durch die Druckdifferenz zwischen den beiden Steuerräumen 42, 43 verändert. Durch Variieren der Druckdifferenz kann die Position des Kolbens 31 bzw. dessen Kraft und somit die am Ventilglied 10 angreifende Vorspannung eingestellt werden.

Im Beispiel erfolgt dies durch Spannen bzw. Entspannen der Schließfeder 17, also durch Verändern der Federkraft. Alternativ ist es bei dieser Bauweise grundsätzlich auch möglich, auf die Schließfeder 17 zu verzichten und die am Ventilglied 10 angreifende und einstellbare Vorspannung ausschließlich über die Stelleinrichtung 18 zu erzeugen.

Bei einer einfachen Ausführungsform wird für beide Steuerräume 42, 43 ein vorbestimmter Steuerdruck bereitgestellt, der dem jeweiligen Steuerraum 42, 43 wechselweise zugeführt wird, während der jeweilige andere Steuerraum 42, 43 zur Umgebung 34 hin entspannt wird. Damit kann auch hier der Ventilöffnungsdruck zwischen zwei Einstellungen variiert werden.

## Patentansprüche

1. Filtereinrichtung, insbesondere Flüssigkeitsfiltereinrichtung, vorzugsweise Ölfiltereinrichtung,
- mit wenigstens einem Filterelement (2), das in einem Filtergehäuse (3) eine Rohseite (4) von einer Reinseite (5) trennt,
- mit einem Bypassventil (8) zum Steuern eines das wenigstens eine Filterelement (2) umgehenden Bypasses (9),
- wobei das Bypassventil (8) ein Ventilglied (10) zum Steuern einer Bypassöffnung (11) aufweist, die einen mit der Rohseite (4) fluidisch verbundenen Kopplungsraum (15) des Bypassventils (8) mit der Reinseite (5) fluidisch verbindet,
- wobei das Ventilglied (10) mit einer zumindest teilweise von einer Schließfeder (17) erzeugten Vorspannung in eine die Bypassöffnung (11) schließende Schließstellung angetrieben ist,
- wobei das Bypassventil (8) eine Stelleinrichtung (18) zum Verändern der am Ventilglied (10) angreifenden Vorspannung aufweist,
**dadurch gekennzeichnet,**
**dass** die Stelleinrichtung (18) mit wenigstens einem Steuerraum (23; 42, 43) gekoppelt ist und die am Ventilglied (10) angreifende Vorspannung abhängig von einem im Steuerraum (23) herrschenden Steuerdruck (P₃) einstellt.

2. Filtereinrichtung nach Anspruch 1,
**dadurch gekennzeichnet,**
**dass** die Stelleinrichtung (18) ein Stellglied (19) aufweist, das den Steuerraum (23) vom Kopplungsraum (15) fluidisch trennt und das abhängig von einer Druckdifferenz zwischen Kopplungsraum (15) und Steuerraum (23) zum Verändern der am Ventilglied (10) angreifenden Vorspannung verstellbar ist.

3. Filtereinrichtung nach Anspruch 1 oder 2,
**dadurch gekennzeichnet,**
**dass** der Steuerraum (23) hermetisch verschlossen ist oder mit einer Umgebung (34) des Filtergehäuses (3) kommuniziert oder mit einer Steuereinrichtung (37) zum Einstellen des Steuerdrucks (P₃) gekoppelt ist.

4. Filtereinrichtung zumindest nach Anspruch 2,
**dadurch gekennzeichnet,**
**dass** die Schließfeder (17) indirekt über eine Koppelstange (20) oder direkt am Stellglied (19) abgestützt ist, wobei insbesondere vorgesehen sein kann, dass die Schließfeder (17) einerseits am Stellglied (19) und andererseits an einem relativ zur Bypassöffnung (11) ortsfesten Widerlager (21) abgestützt ist, wobei die Koppelstange (20) das Stellglied (19) fest mit dem Ventilglied (10) verbindet, so dass eine Verstellung des Stellglieds (19) zu einer Verstellung des Ventilglieds (10) führt, oder dass die Schließfeder (17) einerseits am Ventilglied (10) und andererseits an der Koppelstange (20) abgestützt ist, wobei die Koppelstange (20) fest mit dem Stellglied (19) verbunden ist, so dass eine Verstellung des Stellglieds (19) zu einer Veränderung der Vorspannung der Schließfeder (17) führt.

5. Filtereinrichtung nach Anspruch 4,
**dadurch gekennzeichnet,**
**dass** das Ventilglied (10) entlang der Koppelstange (20) hubverstellbar ist, wobei die Schließfeder (17) und das Stellglied (19) bezüglich des Ventilglieds (10) an entgegengesetzten Seiten angeordnet sind, oder dass das Stellglied (19) und die Schließfeder (17) bezüglich des Ventilglieds (10) an derselben Seite angeordnet sind.

6. Filtereinrichtung nach einem der Ansprüche 2 bis 5,
**dadurch gekennzeichnet,**
**dass** das Stellglied (19) eine Membran (22) ist, die den Kopplungsraum (15) vom Steuerraum (23) trennt.

7. Filtereinrichtung nach Anspruch 6,
**dadurch gekennzeichnet,**
- **dass** der Steuerraum (23) in einer Druckdose (24) ausgebildet ist, an der die Membran (22) angebracht ist, wobei insbesondere vorgesehen sein kann, dass der Steuerraum (23) in der Druckdose (24) hermetisch verschlossen ist, und/oder
- **dass** die Druckdose (24) außerdem den Kopplungsraum (15) und eine die Bypassöffnung (11) enthaltende Trennwand (25) aufweist, und/oder
- **dass** die Druckdose (24) und das Bypassventil (8) eine bezüglich des Filtergehäuses (3) separate Ventilbaugruppe (26) bilden.

8. Filtereinrichtung nach Anspruch 7,
**dadurch gekennzeichnet,**
- **dass** die Ventilbaugruppe (26) am Filterelement (2) angebracht ist, und/oder
- **dass** die Ventilbaugruppe (26) und das Filterelement (2) eine Ventil-Filter-Einheit (30) bilden, die in das Filtergehäuse (3) austauschbar eingebaut ist.

9. Filtereinrichtung nach einem der Ansprüche 2 bis 8,
**dadurch gekennzeichnet,**
**dass** das Stellglied (19) ein Kolben (31) ist, der in einem Zylinder (32) hubverstellbar angeordnet ist und in diesem Zylinder (32) den Kopplungsraum (15) vom Steuerraum (23) trennt.

10. Filtereinrichtung nach Anspruch 9,
**dadurch gekennzeichnet,**
- **dass** der Zylinder (32) im Filtergehäuse (3) integral ausgeformt ist, und/oder
- **dass** der Steuerraum (23) über eine Verbindungsöffnung (33) mit einer, insbesondere atmosphärischen, Umgebung (34) des Filtergehäuses (3) kommunizierend verbunden ist oder über einen Steuerdruckanschluss (35) mit einem Steuerdruck beaufschlagbar ist.

11. Filtereinrichtung nach einem der Ansprüche 1, 4 und 5,
**dadurch gekennzeichnet,**
**dass** die Stelleinrichtung (18) ein Stellglied (19) aufweist, das zum Verändern der am Ventilglied (10) angreifenden Vorspannung verstellbar ist und das als Kolben (31) ausgestaltet ist, der in einem Zylinder (32) einen ersten Steuerraum (42) von einem zweiten Steuerraum (43) trennt, die beide vom Kopplungsraum (15) fluidisch entkoppelt sind.

12. Filtereinrichtung nach Anspruch 11,
**dadurch gekennzeichnet,**
**dass** der eine Steuerraum (42) über einen Steuerdruckanschluss (46) mit einem Steuerdruck beaufschlagbar ist, während der andere Steuerraum (43) über eine Verbindungsöffnung mit einer, insbesondere atmosphärischen, Umgebung (34) des Filtergehäuses (3) kommunizierend verbunden ist oder über einen weiteren Steuerdruckanschluss (47) mit dem gleichen oder mit einem anderen Steuerdruck beaufschlagbar ist.

13. Filtereinrichtung nach einem der Ansprüche 2 bis 12,
**dadurch gekennzeichnet,**
**dass** eine Stellgliedfeder (41) vorgesehen ist, die das Stellglied (19) in eine die Vorspannung verstärkende Richtung vorspannt.

14. Filtereinrichtung nach einem der Ansprüche 2 bis 13,
**dadurch gekennzeichnet,**
- **dass** ein (erster) Endanschlag (46) zur Begrenzung des Verstellwegs des Stellglieds (19) in einer die Vorspannung verstärkenden Richtung vorgesehen ist, und/oder
- **dass** ein (zweiter) Endanschlag (48) zur Begrenzung des Verstellwegs des Stellglieds (19) in einer die Vorspannung reduzierenden Richtung vorgesehen ist.

## Claims

1. Filtering device, in particular a liquid filtering device, preferably an oil filtering device,
- comprising at least one filter element (2) which separates a raw side (4) from a clean side (5) within a filter housing (3),
- comprising a bypass valve (8) for controlling a bypass (9) circumventing the at least one filter element (2),
- the bypass valve (8) having a valve member (10) for controlling a bypass opening (11) by means of which a coupling chamber (15) of the bypass valve (8), fluidically connected to the raw side (4), is fluidically connected to the clean side (5),
- the valve member (10) being driven, with a bias generated at least in part by a closing spring (17), into a closing position that closes off the bypass opening (11),
- the bypass valve (8) having an actuating device (18) for varying the bias acting on the valve member (10),
**characterised in that**
the actuating device (18) is coupled to at least one control chamber (23; 42, 43) and sets the bias acting on the valve member (10) as a function of a control pressure (P₃) prevailing in the control chamber (23).

2. Filtering device according to claim 1,
**characterised in that** the actuating device (18) has an actuating member (19) which fluidically separates the control chamber (23) from the coupling chamber (15) and which is adjustable as a function of a pressure difference between the coupling chamber (15) and the control chamber (23) in order to vary the bias acting on the valve member (10).

3. Filtering device according to claim 1 or 2,
**characterised in that** the control chamber (23) is hermetically closed or communicates with an environment (34) of the filter housing (3) or is coupled to a control device (37) for setting the control pressure (P₃).

4. Filtering device at least according to claim 2,
**characterised in that** the closing spring (17) is supported indirectly by means of a coupling rod (20) or directly on the actuating member (19), it being possible in particular to provide that the closing spring (17) is supported on the actuating member (19), on the one hand, and on an abutment (21) which is fixed relative to the bypass opening (11), on the other hand, the coupling rod (20) rigidly connecting the actuating member (19) to the valve member (10), so that adjustment of the actuating member (19) leads to adjustment of the valve member (10), or **in that** the closing spring (17) is supported on the valve member (10), on the one hand, and on the coupling rod (20), on the other hand, the coupling rod (20) being rigidly connected to the actuating member (19), so that adjustment of the actuating member (19) leads to a change in the biasing of the closing spring (17).

5. Filtering device according to claim 4,
**characterised in that** the valve member (10) is adjustable in its stroke along the coupling rod (20), the closing spring (17) and the actuating member (19) being arranged on opposite sides with respect to the valve member (10), or **in that** the actuating member (19) and the closing spring (17) are arranged on the same side with respect to the valve member (10).

6. Filtering device according to any of claims 2 to 5,
**characterised in that** the actuating member (19) is a membrane (22) which separates the coupling chamber (15) from the control chamber (23).

7. Filtering device according to claim 6,
**characterised in that**
- the control chamber (23) is formed in a pressure cell (24) on which the membrane (22) is arranged, it being possible in particular to provide that the control chamber (23) in the pressure cell (24) is hermetically closed, and/or
- the pressure cell (24) further comprises the coupling chamber (15) and a partition wall (25) containing the bypass opening (11), and/or
- the pressure cell (24) and the bypass valve (8) form a valve assembly (26) which is separate from the filter housing (3).

8. Filtering device according to claim 7,
**characterised in that**
- the valve assembly (26) is arranged on the filter element (2), and/or
- the valve assembly (26) and the filter element (2) form a valve/filter unit (30) which is replaceably incorporated into the filter housing (3).

9. Filtering device according to any of claims 2 to 8,
**characterised in that** the actuating member (19) is a piston (31) which is arranged to be adjustable in its stroke in a cylinder (32) and which separates the coupling chamber (15) from the control chamber (23) in this cylinder (32).

10. Filtering device according to claim 9,
**characterised in that**
- the cylinder (32) is integrally formed in the filter housing (3), and/or
- the control chamber (23) is connected for communication with an, in particular, atmospheric environment (34) of the filter housing (3) via a connection opening (33) or can be pressurised with a control pressure by means of a control pressure connection (35).

11. Filtering device according to any of claims 1, 4 and 5,
**characterised in that** the actuating device (18) comprises an actuating member (19) which can be adjusted in order to vary the bias acting on the valve member (10) and which is embodied as a piston (31) which, in a cylinder (32), separates a first control chamber (42) from a second control chamber (43), both of which are fluidically uncoupled from the coupling chamber (15).

12. Filtering device according to claim 11,
**characterised in that** one control chamber (42) can be pressurised with a control pressure via a control pressure connection (46), while the other control chamber (43) is connected for communication with an, in particular, atmospheric environment (34) of the filter housing (3), via a connection opening, or can be pressurised with the same or a different control pressure through another control pressure connection (47).

13. Filtering device according to any of claims 2 to 12,
**characterised in that**
an actuating member spring (41) is provided which biases the actuating member (19) in a direction that reinforces the bias.

14. Filtering device according to any of claims 2 to 13,
**characterised in that**
- a (first) end stop (46) is provided for limiting the adjustment travel of the actuating member (19) in a direction that reinforces the bias, and/or
- a (second) end stop (48) is provided for limiting the adjustment travel of the actuating member (19) in a direction that reduces the bias.

## Revendications

1. Dispositif de filtration, en particulier dispositif de filtration de liquide, de préférence dispositif de filtration d'huile, comprenant
- au moins un élément de filtration (2), qui sépare, dans un boîtier de filtration (3), un côté brut (4) d'un côté pur (5),
- une soupape de dérivation (8) servant à commander une dérivation (9) contournant l'au moins un élément de filtration (2),
- où la soupape de dérivation (8) présente un organe de soupape (10) servant à commander une ouverture de dérivation (11), qui relie fluidiquement un espace de couplage (15), relié fluidiquement au côté brut (4), de la soupape de dérivation (8) au côté pur (5),
- où l'organe de soupape (10) est entraîné, selon une précontrainte générée au moins en partie par un ressort de fermeture (17), dans une position de fermeture fermant l'ouverture de dérivation (11),
- où la soupape de dérivation (8) présente un dispositif de réglage (18) servant à modifier la précontrainte appliquée au niveau de l'organe de soupape (10),
**caractérisé en ce**
**que** le dispositif de réglage (18) est couplé à au moins un espace de commande (23 ; 42, 43) et règle la précontrainte exercée au niveau de l'organe de soupape (10) en fonction d'une pression de commande (P₃) régnant dans l'espace de commande (23).

2. Dispositif de filtration selon la revendication 1,
**caractérisé en ce**
**que** le dispositif de réglage (18) présente un organe de réglage (19), qui sépare fluidiquement l'espace de commande (23) de l'espace de couplage (15) et qui peut être déplacé, en fonction d'une différence de pression, entre l'espace de couplage (15) et l'espace de commande (23) afin de modifier la précontrainte exercée au niveau de l'organe de soupape (10).

3. Dispositif de filtration selon la revendication 1 ou 2,
**caractérisé en ce**
**que** l'espace de commande (23) est fermé hermétiquement ou communique avec un environnement (34) du boîtier de filtration (3) ou est couplé à un dispositif de commande (37) servant à régler la pression de commande (P₃).

4. Dispositif de filtration au moins selon la revendication 2,
**caractérisé en ce**
**que** le ressort de fermeture (17) s'appuie indirectement par l'intermédiaire d'une tige de couplage (20) ou directement au niveau de l'organe de réglage (19), où il peut être prévu en particulier que le ressort de fermeture (17) s'appuie d'une part au niveau de l'organe de réglage (19) et d'autre part au niveau d'un contre-palier (21) immobile par rapport à l'ouverture de dérivation (11), où la tige de couplage (20) relie l'organe de réglage (19) de manière solidaire à l'organe de soupape (10) de sorte qu'un déplacement de l'organe de réglage (19) entraîne un déplacement de l'organe de soupape (10), ou que le ressort de fermeture (17) s'appuie d'une part au niveau de l'organe de soupape (10) et d'autre part au niveau de la tige de couplage (20), où la tige de couplage (20) est reliée de manière solidaire à l'organe de réglage (19) de sorte qu'un déplacement de l'organe de réglage (19) entraîne une modification de la précontrainte du ressort de fermeture (17).

5. Dispositif de filtration selon la revendication 4,
**caractérisé en ce**
**que** l'organe de soupape (10) peut être déplacé le long de la tige de couplage (20) de manière à pouvoir régler sa course, où le ressort de fermeture (17) et l'organe de réglage (19) sont disposés au niveau de côtés opposés par rapport à l'organe de soupape (10), ou bien l'organe de réglage (19) et le ressort de fermeture (17) sont disposés au niveau du même côté par rapport à l'organe de soupape (10).

6. Dispositif de filtration selon l'une quelconque des revendications 2 à 5,
**caractérisé en ce**
**que** l'organe de réglage (19) est une membrane (22), qui sépare l'espace de couplage (15) de l'espace de commande (23).

7. Dispositif de filtration selon la revendication 6,
**caractérisé en ce**
- **que** l'espace de commande (23) est réalisé dans un contenant sous pression (24), au niveau duquel la membrane (22) est installée, où il peut être prévu en particulier que l'espace de commande (23) est fermé hermétiquement dans le contenant sous pression (24), et/ou
- **que** le contenant sous pression (24) présente par ailleurs l'espace de couplage (15) et une cloison de séparation (25) contenant l'ouverture de dérivation (11), et/ou
- **que** le contenant sous pression (24) et la soupape de dérivation (8) forment un module de soupape (26) séparé par rapport au boîtier de filtration (3).

8. Dispositif de filtration selon la revendication 7,
**caractérisé en ce**
- **que** le module de soupape (26) est installé au niveau de l'élément de filtration (2), et/ou
- **que** le module de soupape (26) et l'élément de filtration (2) forment une unité filtre-soupape (30) qui est intégrée de manière à pouvoir être remplacée dans le boîtier de filtration (3).

9. Dispositif de filtration selon l'une quelconque des revendications 2 à 8,
**caractérisé en ce**
**que** l'organe de réglage (19) est un piston (31), qui est disposé de manière à pouvoir régler sa course dans un vérin (32) et qui sépare, dans ce vérin (32), l'espace de couplage (15) de l'espace de commande (23).

10. Dispositif de filtration selon la revendication 9,
**caractérisé en ce**
- **que** le vérin (32) est formé intégralement dans le boîtier de filtration (3), et/ou
- **que** l'espace de commande (23) est relié de manière à communiquer, par l'intermédiaire d'une ouverture de liaison (33), à un environnement (34), en particulier atmosphérique, du boîtier de filtration (3) ou peut être soumis à une pression de commande par l'intermédiaire d'un raccordement de pression de commande (35).

11. Dispositif de filtration selon l'une quelconque des revendications 1,4 et 5,
**caractérisé en ce**
**que** le dispositif de réglage (18) présente un organe de réglage (19), qui peut être déplacé afin de modifier la précontrainte exercée au niveau de l'organe de soupape (10) et qui est configuré sous la forme d'un piston (31), qui sépare, dans un vérin (32), un premier espace de commande (42) d'un deuxième espace de commande (43), lesquels sont découplés fluidiquement de l'espace de couplage (15).

12. Dispositif de filtration selon la revendication 11,
**caractérisé en ce**
**que** l'un des espaces de commande (42) peut être soumis à une pression de commande par l'intermédiaire d'un raccordement de pression de commande (46), tandis que l'autre espace de commande (43) est relié, de manière à communiquer, à un espace (34), en particulier atmosphérique, du boîtier de filtration (3) par l'intermédiaire d'une ouverture de liaison ou peut être soumis à la pression de commande identique ou à une autre pression de commande par l'intermédiaire d'un autre raccordement de pression de commande (47).

13. Dispositif de filtration selon l'une quelconque des revendications 2 à 12,
**caractérisé en ce**
**qu'**un ressort d'organe de réglage (41) est prévu, lequel précontraint l'organe de réglage (19) dans une direction amplifiant la précontrainte.

14. Dispositif de filtration selon l'une quelconque des revendications 2 à 13,
**caractérisé en ce**
- **qu'**une (première) butée d'extrémité (46) est prévue afin de délimiter la course de déplacement de l'organe de réglage (19) dans une direction amplifiant la précontrainte, et/ou
- **qu'**une (deuxième) butée d'extrémité (48) est prévue afin de délimiter la course de déplacement de l'organe de réglage (19) dans une direction réduisant la précontrainte.
